# EUROPEAN PATENT APPLICATION

(11) **EP 1 903 487 A1**
(43) Date of publication of application: **26.03.2008**
(21) Application number: 06020898.0
(22) Date of filing: 05.10.2006
(51) Int. Cl.: G06Q 20/00, G07B 15/00, G08G 1/065

(54) **Operating system for managing public parking lot**

(30) Priority: 29.08.2006 BR PI0603648
(71) Applicant: Martins, Domingos Nelson, 01220-010 Sao Paulo (BR)
(72) Inventor: Martins, Domingos Nelson, 01220-010 Sao Paulo (BR)
(74) Representative: Siniscalco, Fabio

(57) **Abstract**

Aimed at providing a solution for controlling public parking lots, by using for this, telecommunications technology which, associated with mobile devices, will allow the interconnection of the Sales terminals with the supervising means, in order to make the process purely electronic and automated.

## Description

### FIELD OF INVENTION

This specification refers to an **OPERATING SYSTEM FOR MANAGING PUBLIC PARKING LOT,** which is aimed at providing a solution for the control of public parking lots, using for this telecommunications technology which, associated with mobile devices, will allow the interconnection of sales terminals with supervising means, in order to make the entire process purely electronic and automated.

### SUMMARY OF INVENTION

**The OPERATING SYSTEM FOR MANAGING PUBLIC PARKING LOT,** herein proposed, is based on obtaining an electronic credit, which can be purchased in authorized points of sale, previously activated in the system, or by any remote data transmitting means, such as, for example, through Internet or through a mobile phone, and in such cases, the electronic credit should be pre- or post-paid.

During purchase there will be issued, by means of an electronic terminal, duly setup in the system, an electronic coupon, wherein it will be shown the identification of the vehicle or its owner, the amount of credited hours, the password and the number of mobile phone for activating and deactivating use, as well as the number of the coupon, such electronic terminal informs the system server about the transaction carried out, and the vehicle, after being activated by the system, is in a regular condition and can remain parked during the period determined by the local management body, or, in the lack of a specific determination, for the time period informed when activated by the system.

The supervision will be carried out by an agent duly qualified for this purpose, with the aid of PDA (Personal Digital Assistant) type equipment, using a specific software for such application, and which has been activated together with the mobile phone operator, thus being possible to transmit data and connect to Internet, through which the agent can have access to consulting and notifying operations of the system, in order to obtain information about the status of the parked vehicle, being able to obtain information of the vehicle characteristics, so as to avoid eventual frauds, and in case of verifying that the vehicle is irregular, the system still offers the feature of infringement notification, all such supervising operations being stored in the system for auditing purposes.

### BACKGROUND OF THE ART

The management of public parking lots is currently carried out through the use of tokens, which are purchased by the users and placed visibly inside the cars, so that the agent can verify, by viewing the token, if the parked vehicle is in regular condition, which apart from being imprecise, is also little productive, providing a great probability of errors and/or frauds.

### FUNDAMENTS OF THE INVENTION

In order to overcome the inconveniences due to the current techniques, it has been created and developed the present **OPERATING SYSTEM FOR MANAGING PUBLIC PARKING LOT,** through which the user can purchase an electronic credit, from a network of authorized points of sale or by remotely accessing directly the system, to obtain an electronic coupon, with the amount of hours desired, and he can specify one vehicle or a fleet of vehicles which can use the parking hours, and after conciliation of payment for purchasing such coupon, the activation and deactivation of its use will be remotely carried out, such conditions also being remotely informed to the supervising agent, so that he can proceed the control of the parked vehicles in his actuating area, and proceed, if that is the case, with the notification of infringements which have been observed.

### BRIEF DESCRIPTION OF THE DRAWING

For a better understanding of this **OPERATING SYSTEM FOR MANAGING PUBLIC PARKING LOT,** reference is made to the annexed drawing, wherein:

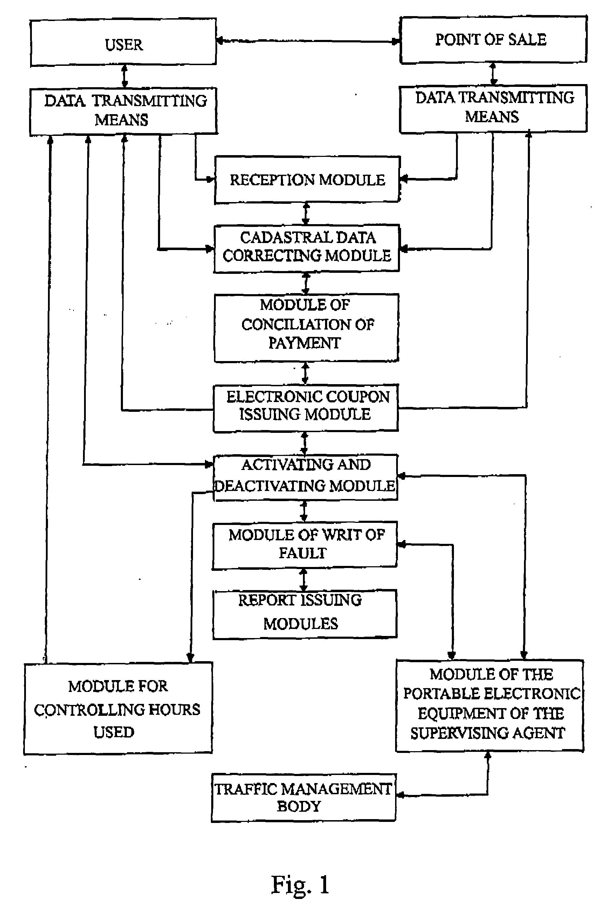

Figure 1 - it shows the block diagram of the operating system for managing public parking lot proposed herein.

### PREFERRED OPERATIONAL CAPACITY OF THE INVENTION

According to what has been shown in the annexed figure, the **OPERATING SYSTEM FOR MANAGING PUBLIC PARKING LOT,** herein proposed, is based on the use of telecommunication technology and mobile devices, and which can incorporate a network of points of sale or be remotely accessed through any data transmitting means, in the case of purchasing electronic credit from an authorized point of sale, there can be used a sales terminal duly installed and setup in the system, where the conciliation of payment by the issue of the electronic coupon can use a POS (Point of Sale) type equipment, and in the case of purchasing electronic credit through remote access to the system, there can be used the site of the system in the WEB, or through fixed or mobile telephony system, where the conciliation through the issue of the electronic coupon can be pre- or post-paid, and independent on the way of purchasing the electronic credit, the system will request identification of the vehicle, for example, the number plate, or the identification of the owner of a fleet of vehicles, for example, the fleet registration number, the amount of hours he wants to purchase, the mobile phone number which will be used for activating and deactivating the use of electronic credit, such information being received at the Receiving Module of the system, and being possible by means of the Cadastral Data correcting module, to alter the information supplied when purchasing the electronic credit, for example, the number plate of the vehicle and/or the mobile telephone number, and upon its confirmation, by the Module of Conciliation of payment, the payment of the requested electronic credit is generated, by the Electronic Coupon Issuing Module, a numbered receipt, which besides containing the information supplied in the system, will show a password, to be used for activating and deactivating the credit of parking hours, which can be carried out by sending a SMS (Short Message System) type message, through the mobile phone informed at the system, or by means of a Call Center or the Assistance Center of the system, the number and the password of the receipt of the electronic coupon being informed, independent of the means used, the request is received in the Activating and Deactivating Module, which will return a confirmation of the operation to the mobile phone informed in the system, when activating the electronic coupon, if the parking period which is near its end, the system will send, through the Module for Controlling Used hours, a message to the mobile phone registered in the system, so that the user can, if he still has credit and/or if it is foreseen by the local rules for public parking lots, extend the activating period of his electronic coupon, or, in case such conditions are not met, inform about the need of leaving the vacancy, such checking of the use of the system will be carried out by an agent duly qualified with the system for such activity, who will have a portable electronic equipment, such as for example, a PDA (Personal Digital Assistant), duly activated with the mobile telephony operator, and using a property software specific for this application, with access to data transmission and connection to Internet, and through which the supervising agent can consult the system in order to obtain, by typing the number plate of the vehicle parked in his inspecting area, information on its situation, such request is received at the Activating and Deactivating Module, which after consulting the number plate supplied, will also consult the Coupon issuing module, returning the information to the Module of the Portable Electronic Equipment of the Supervising Agent, which can be the confirmation that the vehicle is exempt of this service; or that the vehicle is in a regular condition, with its electronic coupon activated, and in this case it will also be informed the remaining minutes; or that the vehicle is irregular, with the activation period of its electronic coupon expired, and in this case, it will also be informed the exceeding minutes; or if the vehicle is irregular and its electronic coupon is deactivated, or if the vehicle is irregular with no electronic coupon, apart from this functionality, the system also offers the possibility of the agent to access the Traffic Management Body, which can be or not operated by the system, and through consultation in its data bank the number plate of the vehicle, in order to obtain confirmation of its characteristics, thus reducing the probability of errors and eventual frauds; such feature will also allow the agent, upon verifying an irregular parking condition, to notify such infringement, which penalty should be previously determined in the system, and can be a warning, an irregularity notification, subject or not to the payment of a regularization tax, or a fine, all the occurrences verified during inspection should be stored in the system, generating recorded registrations containing the identification of the agent and his portable electronic equipment, the number plate of the vehicle under consultation, the answer given by the system, and the consultation code, which can be used in the Module of Writ of fault for future references, and the system can also, by means of the Activating and Deactivating Module, send to the supervising agent, in predetermined time intervals in the system, a list of vehicles parked in its actuating area, the activating periods of which electronic coupons have already expired.

The management of the operational capacity of this **OPERATING SYSTEM FOR MANAGING PUBLIC PARKING LOT** will be carried out through the Report Issuing Module, which makes available management reports which can include the total of issued electronic coupons, the total per point of sale, the total per zoning, the total of consultations carried out by the supervision, the total of warning, notifications and fines applied, the tracking of detailed information of an electronic coupon, among others.

All the parameters related to the setup of this **OPERATING SYSTEM FOR MANAGING PUBLIC PARKING LOT** can be easily altered, such as the value of the tariff charged, the days and times of operation, allocation of the plan of vacancies in differentiated zones with individual characteristics, the conditions for commercializing special or promotional electronic coupons, the list of number plates with definite or temporary exemption, the control of event notification by SMS, such as, for example, warning about the balance about to be expired, methods of notifying irregularities among others.

## Claims

1. **OPERATING SYSTEM FOR MANAGING PUBLIC PARKING LOT, characterized** for being based on the use of telecommunication technology and mobile devices, and which can incorporate a network of points of sale or be remotely accessed through any data transmitting means, in the case of purchasing electronic credit from an authorized sales point, there can be used a sales terminal duly installed and setup in the system, where the conciliation of payment by issuing the electronic coupon can use a POS (Point of Sale) type equipment, and in the case of purchasing electronic credit through remote access to the system, there can be used the site of the system in the WEB, or through fixed or mobile telephony system, where the conciliation by the issue of the electronic coupon can be pre- or post-paid, and independent on the way of purchasing the electronic credit, the system will request identification of the vehicle, for example, the number plate, or the identification of the owner of a fleet of vehicles, for example, the fleet registration number, the amount of hours he wants to purchase, the mobile phone number which will be used for activating and deactivating the use of electronic credit, such information being received at the Receiving Module of the system, and being possible by means of the Cadastral Data correcting module, to alter the information supplied when purchasing the electronic credit, for example, the number plate of the vehicle and/or the mobile telephone number, and upon its confirmation, by the Module of Conciliation of Payment, the payment of the requested electronic credit is generated, by the Electronic Coupon Issuing Module, a numbered receipt, which besides containing the information supplied in the system, will show a password, to be used for activating and deactivating the credit of parking hours, which can be carried out by sending a SMS (Short Message System) type message, through the mobile phone informed at the system, or by means of a Call Center or the Assistance Center of the system, the number and the password of the receipt of the electronic coupon being informed, independent of the means used, the request is received in the Activating and Deactivating Module, which will return a confirmation of the operation to the mobile phone informed in the system, when activating the electronic coupon, if the parking period which is near its end, the system will send, through the Module for Controlling Used hours, a message to the mobile phone registered in the system, so that the user can, if he still has credit and/or if it is foreseen by the local rules for public parking lots, extend the activating period of his electronic coupon, or, in case such conditions are not met, inform about the need of leaving the vacancy, such checking of the use of the system will be carried out by an agent duly qualified with the system for such activity, who will have a portable electronic equipment, such as for example, a PDA (Personal Digital Assistant), duly activated with the mobile telephony operator, and using a property software specific for this application, with access to data transmission and connection to Internet, and through which the supervising agent can consult the system in order to obtain, by typing the number plate of the vehicle parked in his inspection area, information on its situation, such request is received at the Activating and Deactivating Module, which after consulting the number plate supplied, will also consult the Coupon issuing module, returning the information to the Module of the Portable Electronic Equipment of the Supervising Agent, which can be the confirmation that the vehicle is exempt of this service; or that the vehicle is in a regular condition, with its electronic coupon activated, and in this case it will also be informed the remaining minutes; or that the vehicle is irregular, with the activation period of its electronic coupon expired, and in this case, it will also be informed the exceeding minutes; or if the vehicle is irregular and its electronic coupon is deactivated, or if the vehicle is irregular with no electronic coupon, apart from this functionality, the system also offers the possibility of the agent to access the Traffic Management Body, which can be or not operated by the system, and through consulting in its data bank the number plate of the vehicle, in order to obtain confirmation of its characteristics, thus reducing the probability of errors and eventual frauds; such feature will also allow the agent, upon verifying an irregular parking condition, to notify such infringement, which penalty should be previously determined in the system, and can be a warning, an irregularity notification, subject or not to the payment of a regularization tax, or a fine, all the occurrences verified during inspection should be stored in the system, generating recorded registrations containing the identification of the agent and his portable electronic equipment, the number plate of the vehicle consulted, the answered given by the system, and the consultation code, which can be used in the Module of writ of fault for future references, and the system can also, by means of the Activating and Deactivating Module, send to the supervising agent, in predetermined time intervals in the system, a list of vehicles parked in its actuating area, the activating periods of which electronic coupons have already expired.

2. **OPERATING SYSTEM FOR MANAGING PUBLIC PARKING LOT,** according to claim 1, **characterized in that** the management of operational capacity of this system is done through the Report Issuing Module, which makes available management reports which can include the total of issued electronic coupons, the total per point of sale, the total per zoning, the total of consultations carried out by the supervision, the total of warning, notifications and fines applied, the tracking of detailed information of an electronic coupon, among others.

3. **OPERATING SYSTEM FOR MANAGING PUBLIC PARKING LOT,** according to claim 1, **characterized in that** all the parameters related to the setup of this system can be easily altered, such as the value of the tariff charged, the days and times of operation, allocation of the plan of vacancies in differentiated zones with individual characteristics, the conditions for commercializing special or promotional electronic coupons, the list of number plates with definite or temporary exemption, the control of event notification by SMS, such as, for example, warning about the balance about to be expired, methods of notifying irregularities, among others.
